**Europäisches Patentamt**

**European Patent Office**

**Office européen des brevets**

(19)

(11) Numéro de publication : **0 025 734**
**B1**

(12) # FASCICULE DE BREVET EUROPÉEN

(45) Date de publication du fascicule du brevet :
**13.07.83**

(21) Numéro de dépôt : **80401202.9**

(22) Date de dépôt : **21.08.80**

(51) Int. Cl.³ : **G 05 G   9/16, F 16 H   5/06**

(54) Dispositif de commande de boîte de vitesses à plusieurs rapports et une marche arrière.

(30) Priorité : **05.09.79 FR 7922236**

(43) Date de publication de la demande :
**25.03.81 Bulletin 81/12**

(45) Mention de la délivrance du brevet :
**13.07.83 Bulletin 83/28**

(84) Etats contractants désignés :
**DE GB IT**

(56) Documents cités :
**DE A 1 930 965**
**DE C 607 043**
**DE C 941 713**
**FR A 999 854**
**FR A 1 056 371**
**FR A 1 457 246**
**FR A 1 471 924**
**FR A 2 236 228**
**FR A 2 299 562**
**GB A 23 031**
**GB A 1 053 353**
**US A 2 017 101**

(73) Titulaire : **SOCIETE ANONYME AUTOMOBILES
CITROEN**
**117 à 167, Quai André Citroen**
**F-75747 Paris Cedex 15 (FR)**

**AUTOMOBILES PEUGEOT**
**75, avenue de la Grande Armée**
**F-75116 Paris (FR)**

(72) Inventeur : **Schiler, Daniel**
**16, Allée des Capucines**
**F-78470 Saint-Remy-lès-Chevreuse (FR)**

(74) Mandataire : **Michardière, Bernard et al**
**Cabinet Plasseraud 84, rue d'Amsterdam**
**F-75009 Paris (FR)**

Dispositif de commande de boîte de vitesses à plusieurs rapports et une marche arrière

L'invention est relative à un dispositif de commande de boîte de vitesses à plusieurs rapports et une marche arrière, comportant des coulisseaux parallèles et espacés, notamment au nombre de trois, chaque coulisseau commandant une fourchette associée à au moins un rapport, et étant monté coulissant dans le carter de la boîte de vitesses sous l'action d'un organe de sélection, notamment formé par un doigt, la commande de la marche arrière et d'un rapport associé, en particulier le rapport le plus élevé, étant assurée à partir d'un même coulisseau auquel est liée, en translation, la fourchette commandant le susdit rapport associé, une pièce intermédiaire étant montée libre en translation sur le coulisseau du rapport associé à la marche arrière, cette pièce intermédiaire étant propre à coopérer avec un organe basculant, des moyens de verrouillage et de billage étant prévus entre les coulisseaux et le carter.

L'invention concerne plus particulièrement, mais non exclusivement, une boîte de vitesses à cinq rapports et une marche arrière.

Le document US-A-2 017 101 montre un dispositif de commande de boîte de vitesses de ce type. Selon ce document, la commande de la marche arrière et du premier rapport est assurée à partir d'un même coulisseau auquel est liée, en translation, une fourchette. Sur ce même coulisseau, une pièce intermédiaire, formée par une deuxième fourchette, est montée libre en translation ; cette deuxième fourchette est destinée à commander le passage du quatrième ou du cinquième rapport de la boîte de vitesses. Les déplacements de cette fourchette, montée libre en translation, sont commandés à partir d'un coulisseau différent dont les mouvements sont transmis à ladite fourchette, montée libre en translation sur le premier coulisseau, par l'intermédiaire d'un organe basculant.

Pour assurer des déplacements de la deuxième fourchette, montée libre en translation sur le premier coulisseau, qui permettent d'engager l'un ou l'autre rapport associé à cette fourchette, il faut que le deuxième coulisseau se déplace de part et d'autre d'une position neutre, d'une amplitude semblable à celle des déplacements du premier coulisseau.

Dans ces conditions, le carter de la boîte de vitesses doit avoir des dimensions suffisantes, suivant la direction des coulisseaux, pour permettre les débattements de ces coulisseaux. Ainsi, l'encombrement du carter de la boîte de vitesses dépend directement de l'amplitude du déplacement des coulisseaux.

Or, il est souhaitable de réduire au minimum l'encombrement de la boîte de vitesses, notamment suivant la direction des coulisseaux. Une telle réduction d'encombrement permet, notamment, un gain de place et une diminution de la masse de la boîte de vitesses.

L'invention a pour but, surtout, de rendre le dispositif de commande tel qu'il permette de réaliser d'une manière simple et économique une commande de la marche arrière d'une boîte de vitesses, sous un encombrement réduit de cette boîte.

Selon l'invention, un dispositif de commande de boîte de vitesses à plusieurs rapports et une marche arrière, du genre défini précédemment, est caractérisé par le fait que ladite pièce intermédiaire est commandée par l'organe de sélection de telle sorte qu'elle peut se déplacer alors que tous les coulisseaux restent immobiles, que ladite pièce intermédiaire, par son déplacement, entraîne l'organe basculant qui commande la marche arrière et que des moyens de verrouillage et de billage sont prévus entre la pièce et le carter de la boîte de vitesses pour, notamment, bloquer les coulisseaux et retenir la pièce intermédiaire lorsque la marche arrière est engagée, chaque fourchette étant liée en translation au coulisseau qui la commande.

Ainsi, selon l'invention, la commande de la marche arrière ne nécessite pas un mouvement de coulisseau. Il en résulte que le coulisseau auquel est liée en translation la fourchette commandant le rapport associé à la marche arrière, aura un déplacement d'amplitude deux fois moins grand que celle d'un coulisseau qui commande le passage de deux rapports. Ce coulisseau, à déplacement d'amplitude réduite, n'intervient dans la commande de la marche arrière que pour assurer, tout en restant immobile, le guidage de la pièce intermédiaire. Ainsi, l'encombrement du carter de boîte de vitesses aura un encombrement réduit, pour un nombre de rapports déterminés.

Le document DE-C-941 713 concerne un dispositif de commande de boîte de vitesses d'un genre différent de celui de l'invention. En effet, selon ce document, le passage des différents rapports n'est pas commandé par plusieurs coulisseaux parallèles, mais par un seul arbre coulissant et rotatif. Toutes les fourchettes de commande sont montées libres en translation autour de cet arbre ; l'entraînement en translation de l'une des fourchettes par l'arbre de commande peut être réalisé lorsque l'arbre de commande, par rotation autour de son axe, prend une position angulaire appropriée pour laquelle un pion d'entraînement, fixé sur cet arbre, vient coopérer avec une encoche prévue dans une partie de la fourchette considérée ; les autres fourchettes sont arrêtées en translation par une bague. Un tel dispositif de commande est relativement compliqué et fait intervenir de nombreux jeux de fonctionnement entre plusieurs pièces, ce qui peut conduire à un fonctionnement moins précis que celui obtenu avec un dispositif de commande à coulisseaux parallèles, les fourchettes de commande étant liées en translation aux coulisseaux.

Selon un mode de réalisation de l'invention, la pièce intermédiaire comporte avantageusement une encoche propre à coopérer avec l'organe de sélection formé par un doigt, tandis que les coulisseaux sont équipés de manchons liés en translation à ces coulisseaux, et éventuellement confondus avec le manchon de la fourchette portée par le coulisseau, chaque manchon comportant une extension transversale dans laquelle est prévue une encoche pour coopérer avec le doigt de sélection ; la pièce intermédiaire et les extensions des manchons sont agencées de telle sorte que les encoches, lorsque la boîte de vitesses est au point mort, sont superposées suivant une direction sensiblement orthogonale à un plan passant par les axes parallèles d'au moins deux coulisseaux, de manière à permettre le passage du doigt de sélection d'une encoche à l'autre par une translation suivant cette direction.

De préférence, la pièce intermédiaire et l'extension du manchon portée par le coulisseau sur lequel est montée la pièce intermédiaire, sont agencées de telle manière que, dans la position de point mort de la boîte de vitesses, les encoches de la pièce intermédiaire et de l'extension du susdit manchon se trouvent à chaque extrémité de la superposition d'encoches, de telle sorte que, pour la commande du passage des vitesses, les positions du levier de commande correspondant à la marche arrière et au rapport associé, notamment le cinquième, sont éloignées l'une de l'autre au maximum.

Avantageusement, la pièce intermédiaire a la forme d'un anneau fermé à contour sensiblement rectangulaire et comportant deux pattes orthogonales au coulisseau et munies d'ouvertures traversées par ce coulisseau, ces pattes étant reliées, d'un côté, par une entretoise portant la susdite encoche et, du côté opposé, par une partie dans laquelle est prévu un trou propre à coopérer avec une extrémité de l'organe basculant.

Les moyens de verrouillage et de billage entre la pièce intermédiaire et le carter de boîte de vitesses comprennent, de préférence, un prolongement formant une sorte d'appendice, sensiblement parallèle au coulisseau, ce prolongement étant solidaire d'une des pattes de la pièce intermédiaire, ledit prolongement comportant des évidements en des endroits appropriés.

L'invention consiste, mises à part les dispositions exposées ci-dessus, en certaines autres dispositions dont il sera plus explicitement question ci-après à propos d'un mode de réalisation particulier décrit avec référence aux dessins ci-annexés, mais qui n'est nullement limitatif.

La figure 1, de ces dessins, est une coupe transversale, simplifiée d'une boîte de vitesses à cinq rapports et une marche arrière, équipée d'un dispositif de commande conforme à l'invention, en position point mort.

La figure 2 est le schéma de la grille de commande des vitesses.

La figure 3 est une coupe suivant III-III, figure 1, en position marche arrière engagée.

La figure 4 est une vue agrandie, suivant la flèche IV figure 1, de la pièce intermédiaire.

La figure 5 est une coupe suivant V-V figure 4.

La figure 6 enfin, est une vue suivant la flèche VI, figure 4.

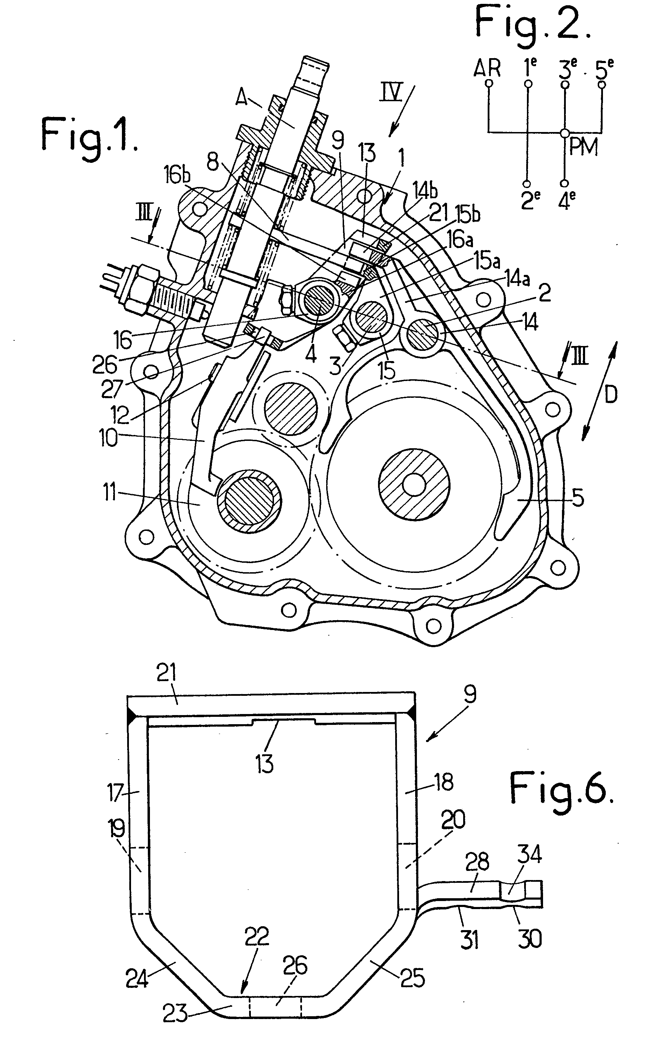

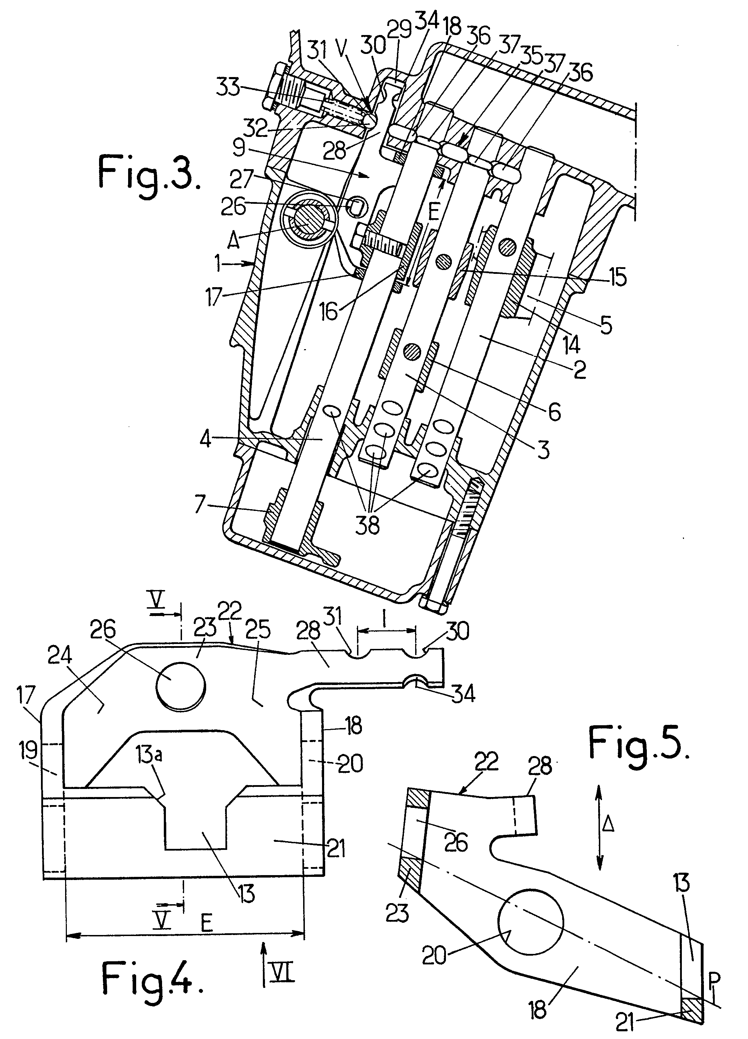

En se reportant aux dessins, et plus particulièrement aux figures 1 et 3, on peut voir un dispositif de commande d'une boîte de vitesses, pour véhicule automobile, à cinq rapports et une marche arrière. Le dispositif comprend, monté dans le carter 1, de la boîte de vitesses, trois coulisseaux parallèles 2, 3, 4 se succédant de droite à gauche sur la fig. 1, dont les axes sont co-planaires ; les coulisseaux sont espacés les uns des autres. Chaque coulisseau 2, 3, 4 porte une fourchette associée 5, 6, 7, respectivement pour l'engagement des premier et deuxième rapports, troisième et quatrième rapports, et cinquième rapport.

Les coulisseaux 2, 3 et 4 sont montés coulissants dans le carter 1 et peuvent être déplacés sous l'action d'un organe de sélection formé par un doigt 8 parallèle au plan des axes des coulisseaux. Le doigt 8 est solidaire d'une tringle de commande A montée dans le carter 1 de manière à pouvoir coulisser suivant la direction de son axe géométrique et à pouvoir tourner autour de cet axe. La tringle A est orthogonale, ou sensiblement orthogonale, au plan des axes des coulisseaux. La commande des mouvements de la tringle A est effectuée, à partir d'un levier, actionné par le conducteur, à l'aide d'une tringlerie, d'une manière classique.

La commande de la marche arrière et du cinquième rapport est assurée à partir du même coulisseau 4 auquel est liée en translation la fourchette 7 commandant le cinquième rapport. Les fourchettes 5 et 6 sont liées en translation, respectivement aux coulisseaux 2 et 3.

A partir de la position représentée sur la figure 3, le déplacement du coulisseau 2, dans un sens, commande le passage du premier rapport, tandis que le déplacement du coulisseau dans l'autre sens commande le passage du deuxième rapport ; il en est de même pour le coulisseau 3 et les troisième et quatrième rapports.

Le dispositif de commande comprend, selon l'invention, une pièce intermédiaire 9 montée libre en translation sur le coulisseau 4 du cinquième rapport associé à la marche arrière ; cette pièce 9 est propre à coopérer avec un organe basculant 10 (fig. 1) pour la commande du baladeur 11 de marche arrière. L'organe 10 peut basculer autour d'un axe 12 solidaire du carter.

La pièce intermédiaire 9 peut être déplacée par le doigt de sélection 8, comme il sera expliqué plus loin en détail, relativement au coulisseau 4 qui reste immobile.

Des moyens V de verrouillage et de billage (fig. 3) sont prévus entre la pièce 9 et le carter 1.

La pièce intermédiaire 9 comporte une encoche 13 (figure 1, 4 et 5) propre à coopérer avec, c'est-à-dire à recevoir, le doigt de sélection 8.

Le coulisseau 2 est équipé d'un manchon 14, formé par celui de la fourchette 5 ; les coulisseaux 3 et 4 sont équipés de manchons 15, 16, distincts de ceux des fourchettes 6 et 7, et situés au même niveau que le manchon 14, suivant la direction longitudinale des coulisseaux. Les manchons sont liés en translation, respectivement, avec les coulisseaux sur lesquels ils sont montés.

Chaque manchon porte une extension transversale, respectivement 14a, 15a, 16a (fig. 1) dans laquelle est prévue, respectivement, une encoche 14b, 15b, 16b pour coopérer avec le doigt de sélection 8.

Les extensions des manchons et la pièce intermédiaire 9 sont agencées de telle sorte que, lorsque la boîte de vitesses est au point mort (position de la figure 1), les encoches 14b, 15b, 16b et 13 sont superposées suivant une direction D orthogonale ou sensiblement orthogonale au plan passant par les axes des coulisseaux. Le doigt de sélection 8, qui est engagé dans au moins une des encoches, peut alors passer de cette encoche dans l'une quelconque des autres encoches par translation suivant la direction D ; cette translation est obtenue par coulissement de la tringle A suivant son axe.

On comprend que l'entraînement en translation de l'un des manchons ou de la pièce 9, par le doigt de sélection 8, est obtenu par rotation de la tringle A autour de son axe géométrique ; le doigt 8 coopère, alors, avec un des bords de l'encoche dans laquelle il est engagé, et déplace, suivant une direction parallèle aux axes géométriques des coulisseaux, un des manchons ou la pièce 9.

La pièce intermédiaire 9 et l'extension 16a du manchon 16, porté par le coulisseau 4, sont engencées comme visible sur la figure 1, de telle sorte que dans la position point mort, l'encoche 13 de la pièce 9 et l'encoche 16b du manchon 16 se trouvent à chaque extrémité de la superposition des encoches.

Dans la représentation de la figure 1, l'encoche 13 se trouve à l'extrémité supérieure de la superposition, tandis que l'encoche 16b se trouve à l'extrémité inférieure. De cette manière, pour la commande du passage des vitesses, les positions du levier correspondant à la cinquième et à la marche arrière (AR) sont éloignées au maximum l'une de l'autre ; selon la représentation de la grille des vitesses de la figure 2, la marche AR est obtenue par déplacement latéral vers l'extrémité gauche du levier puis, en poussant vers l'avant, tandis que le cinquième rapport est obtenu en déplaçant latéralement vers l'extrémité droite le levier puis en poussant vers l'avant. La position point mort du levier se trouve entre le troisième et le quatrième rapports, tandis que, de manière classique, les premier et deuxième rapports sont situés à gauche de la position point mort comme représenté sur cette figure 2.

Comme visible sur les figures 4 à 6, la pièce intermédiaire 9 a la forme d'un anneau fermé à contour sensiblement rectangulaire. Le plan moyen P (fig. 5) de cet anneau forme un angle légèrement inférieur à 90° avec le plan des axes des coulisseaux 2, 3 et 4.

Cet anneau fermé comporte deux pattes 17, 18 situées, respectivement, dans des plans parallèles, et orthogonaux au coulisseau 4. Ces pattes 17, 18, sont munies d'ouvertures circulaires 19, 20, destinées à être traversées par le coulisseau. Les pattes sont reliées d'un côté, par une entretoise 21 destinée à se trouver, par rapport au plan des axes des coulisseaux 2, 3 et 4, du côté opposé à l'organe basculant 10 (fig. 1). La réunion de l'entretoise 21 et des pattes 17, 18 peut être assurée, par exemple, par soudage. L'encoche 13, comme bien visible sur la figure 4, est prévue dans cette entretoise 21 ; l'extrémité ouverte de cette encoche 13 a une forme évasée limitée par des chanfreins 13a, de préférence à 45°.

Du côté opposé à l'entretoise 21, les pattes 17 et 18 sont reliées par une partie 22 comprenant une zone centrale 23 dont le plan est sensiblement parallèle à celui de l'entretoise 21 et deux zones latérales 24, 25 inclinées par rapport à la zone 23 et reliant cette dernière aux pattes 17, 18. L'ensemble de ces pattes 17, 18 et de la partie 22 constitue, de préférence, une seule et même pièce ayant sensiblement la forme d'un U dont les branches correspondent aux pattes 17, 18.

La zone centrale 23 comporte, en son milieu, un trou circulaire 26 dans lequel est engagée la tête 27 de l'organe basculant 10.

La partie 22, comme visible notamment sur la figure 5, est décalée par rapport à l'entretoise 21 suivant une direction $\Delta$ parallèle aux intersections des plans de l'entretoise 21 et des pattes 17, 18.

Les pattes 17, 18, sont suffisamment longues, suivant une direction orthogonale à un plan passant par les axes des coulisseaux, pour encadrer les extensions 14a, 15a, 16a des manchons ; l'entretoise 21 se trouve, comme visible sur la figure 1, au-delà de ces extensions, relativement au plan des axes des coulisseaux.

L'écartement E (fig. 4) de ces pattes 17, 18 suivant la direction longitudinale des coulisseaux est suffisant pour permettre, d'une part, au manchon 16 (fig. 3), qui est compris entre ces pattes, de se déplacer avec le coulisseau 4, par rapport à ces pattes, d'une amplitude telle que la commande du cinquième rapport à partir du point mort soit possible, et d'autre part, un déplacement suffisant de la pièce 9 par rapport au manchon 16 et au coulisseau 4, pour la commande de la marche arrière à partir du point mort.

Les moyens de verrouillage et de billage V entre la pièce intermédiaire 9 et le carter 1 de la boîte de vitesses comprennent un prolongement 28, de la pièce 9, formant une sorte d'appendice (figures 3, 4 et 6) s'étendant parallèlement au coulisseau. Ce prolongement 28 est solidaire de la patte 18 et est sensiblement orthogonal au plan de cette patte 18 ; le prolongement 28 est formé par une languette découpée dans la patte 18 et courbée vers l'extérieur, sensiblement à 90° de manière à pouvoir s'engager dans une sorte de logement 29 (fig. 3) prévu dans la paroi transversale d'extrémité du carter 1.

Le prolongement 28 comporte, du côté opposé aux coulisseaux 2 à 4, deux évidements 30, 31,

propres à coopérer avec une bille 32 poussée élastiquement par un ressort 33 vers l'évidement. Cette bille 32 est disposée dans un logement du carter 1 de manière à être arrêtée par ce carter, suivant la direction des coulisseaux. La coopération de cette bille 32 et d'un des évidements 30, 31 permet le maintien de la pièce 9 dans la position correspondante. Les deux évidements 30, 31, sont séparés par une distance 1 (fig. 4) égale au déplacement de la pièce 9 entre la position de marche arrière engagée et la position neutre de cette pièce 9.

L'autre côté du prolongement 28, tourné vers les coulisseaux, comporte un seul évidement 34 prévu au niveau longitudinal de l'évidement 30, c'est-à-dire au voisinage de l'extrémité du prolongement 28. Cet évidement 34 vient coopérer, lorsque l'évidement 30 arrive au niveau de la bille 32, avec des moyens de verrouillage 35 (fig. 3) formés par un alignement jointif de pions de plus fort diamètre tels que 36 pouvant coulisser dans des logements du carter et de pions 37 de plus petit diamètre, traversant des passages prévus dans les coulisseaux.

L'alignement des pions 36, 37 est orienté perpendiculairement aux axes des coulisseaux ; chaque pion 36 peut coopérer soit avec un évidement, semblable à 34, prévu dans la paroi d'un coulisseau soit avec la surface cylindrique extérieure de ce coulisseau.

L'ensemble des moyens de verrouillage 35 est agencé de telle sorte que lorsque l'évidement 34 et les évidements des coulisseaux sont alignés suivant une direction perpendiculaire à celle des coulisseaux (point mort), il est possible de déplacer l'un des coulisseaux ou la pièce 9. Toutefois, dès que l'un des coulisseaux ou la pièce 9 a été déplacé, il n'y a plus alignement des évidements 34 et les pions empilés 36, 37 sont bloqués et empêchent tout déplacement d'un autre coulisseau et/ou de la pièce 9.

Dans la position représentée sur la figure 3, correspondant à l'engagement de la marche AR, le pion supérieur 36 est en appui contre la surface extérieure du prolongement 28 et l'empilage de pions 36, 37 est en butée à chacune de ses extrémités respectivement contre le prolongement 28 et contre l'évidement prévu dans le coulisseau 2. En outre, les pions 36, 37 sont bout-à-bout et ne peuvent donc se déplacer suivant la direction de leur axe. Les coulisseaux 2 à 4 sont ainsi bloqués.

Ce n'est que lorsque l'évidement 34 vient au droit du pion 36 qu'il est possible de déplacer l'un des autres coulisseaux, ce déplacement provoquant le verrouillage des autres coulisseaux et de la pièce 9.

D'autres moyens de billage sont prévus pour coopérer avec des évidements tels que 38 (fig. 3) prévus dans les coulisseaux et correspondant à l'engagement d'un rapport ou à la position point mort.

Ceci étant, le fonctionnement du dispositif de commande de boîte de vitesses, selon l'invention, est le suivant.

Le fonctionnement ne sera décrit que pour l'engagement du cinquième rapport et pour l'engagement de la marche AR, le passage des autres rapports étant classique.

Pour le passage du cinquième rapport, le doigt de sélection 8 est amené dans l'encoche 16b du manchon 16, par translation de la tige A suivant la direction de son axe géométrique (fig. 1). Ce mouvement correspond à un déplacement transversal vers la droite, selon la grille de la figure 2, du levier de commande.

L'entraînement du manchon 16, du coulisseau 4 et de la fourchette 7 vers le haut de la figure 3 est obtenu par rotation de la tige A autour de son axe ce qui provoque un déplacement du doigt 8 dans un plan perpendiculaire à cette tige A. Lors de ce passage du cinquième rapport, la pièce 9 occupe une position telle que la bille 32 soit en appui dans l'évidement 30.

Le retour au point mort est obtenu par le mouvement inverse du doigt de sélection 8.

Pour l'engagement de la marche arrière, alors que tous les manchons et la pièce 9 se trouvent en position point mort, le doigt de sélection 8 est introduit, par déplacement de la tige A en translation suivant son axe géométrique, dans l'encoche 13 de la pièce 9 (fig. 1).

Puis, une rotation de la tige A autour de son axe provoque un déplacement en rotation du doigt de sélection 8 dans un plan perpendiculaire à cet axe, cette rotation entraînant un déplacement de la pièce 9 parallèlement au coulisseau 4, vers le haut quand on regarde la figure 3. La bille 32 passe de l'encoche 30 à l'encoche 31. La position représentée sur la figure 3 correspond à la marche AR engagée.

Au cours de ce déplacement de la pièce 9, la tête 27 de l'organe basculant 10 est entraînée par la paroi du trou circulaire 26 de la pièce 9. L'organe basculant 10 pivote autour de l'axe 12 et déplace le baladeur 11 de manière à permettre l'engagement de la marche arrière.

Le pion 36 qui se trouvait, pour la position point mort de la pièce 9, en appui contre l'évidement 34, se trouve, maintenant, en appui contre la surface extérieure du prolongement 28 ce qui, comme expliqué précédemment, assure le verrouillage des trois autres coulisseaux 2, 3, 4.

Le dispositif de l'invention permet donc d'assurer la commande de la marche AR et du cinquième rapport, à partir du même coulisseau 4 d'une manière simple, sans nécessiter une augmentation de l'encombrement du carter de boîte de vitesses suivant la direction des coulisseaux.

**Revendications**

1. Dispositif de commande de boîte de vitesses à plusieurs rapports et une marche arrière, comportant des coulisseaux (2, 3, 4) parallèles et espacés, notamment au nombre de trois, chaque coulisseau commandant une fourchette (5, 6, 7) associée à au moins un rapport, et étant monté coulissant dans le carter de la boîte de vitesses sous l'action d'un organe de sélection (8) notamment formé par un doigt, la commande de la marche arrière et d'un rapport associé, en particulier le rapport le plus élevé, étant assurée à partir d'un même coulisseau (4) auquel est liée, en translation, la fourchette (7) commandant le susdit rapport associé, une pièce intermédiaire (9) étant montée libre en translation sur le coulisseau (4) du rapport associé à la marche arrière, cette pièce intermédiaire (9) étant propre à coopérer avec un organe basculant (10), des moyens de verrouillage et de billage étant prévus entre les coulisseaux et le carter, caractérisé par le fait que ladite pièce intermédiaire (9) est commandée par l'organe de sélection (8) de telle sorte qu'elle peut se déplacer alors que tous les coulisseaux restent immobiles, que ladite pièce intermédiaire (9), par son déplacement, entraîne l'organe basculant (10) qui commande la marche arrière, et que des moyens de verrouillage et de billage (V) sont prévus entre la pièce (9) et le carter de boîte de vitesses, pour notamment bloquer les coulisseaux et retenir la pièce intermédiaire lorsque la marche arrière est engagée, chaque fourchette étant liée en translation au coulisseau qui la commande.

2. Dispositif selon la revendication 1, dans lequel la pièce intermédiaire (9) comporte une encoche (13) propre à coopérer avec l'organe de sélection formé par un doigt (8), tandis que les coulisseaux sont équipés de manchons (14, 15, 16) liés en translation à ces coulisseaux, et éventuellement confondus avec le manchon de la fourchette portée par le coulisseau, chaque manchon comportant une extension transversale (14a, 15a, 16a) dans laquelle est prévue une encoche (14b, 15b, 16b) pour coopérer avec le doigt de sélection (8), caractérisé par le fait que la pièce intermédiaire (9) et les extensions (14a, 15a, 16a) des manchons sont agencées de telle sorte que les encoches (13 ; 14b, 15b, 16b) lorsque la boîte de vitesses est au point mort, sont superposées suivant une direction sensiblement orthogonale à un plan passant par les axes parallèles d'au moins deux coulisseaux, de manière à permettre le passage du doigt de sélection (8) d'une encoche à l'autre par une translation suivant cette direction.

3. Dispositif selon la revendication 2, caractérisé par le fait que la pièce intermédiaire (9) et l'extension (16a) du manchon portée par le coulisseau (4) sur lequel est montée la pièce intermédiaire, sont agencées de telle manière que, dans la position de point mort de la boîte de vitesses, les encoches (13, 16b) de la pièce intermédiaire et de l'extension du susdit manchon se trouvent à chaque extrémité de la superposition d'encoches, de telle sorte que, pour la commande du passage des vitesses, les positions du levier de commande correspondant à la marche arrière et au rapport associé, notamment le cinquième, sont éloignées l'une de l'autre au maximum.

4. Dispositif selon la revendication 2 ou 3, caractérisé par le fait que la pièce intermédiaire (9) a la forme d'un anneau fermé à contour sensiblement rectangulaire et comportant deux pattes (17, 18) orthogonales au coulisseau (4) et munies d'ouvertures (19, 20) traversées par ce coulisseau, ces pattes étant reliées, d'un côté, par une entretoise (21) portant la susdite encoche (13) et, du côté opposé, par une partie (22) dans laquelle est prévu un trou (26) propre à coopérer avec une extrémité (27) de l'organe basculant (10).

5. Dispositif selon la revendication 4, caractérisé par le fait que les moyens de verrouillage et de billage (V) entre la pièce intermédiaire (9) et le carter de boîte de vitesses comprennent un prolongement (28) formant une sorte d'appendice, sensiblement parallèle au coulisseau (4), ce prolongement étant solidaire d'une des pattes (18) de la pièce intermédiaire, ledit prolongement comportant des évidements (30, 31, 34) en des endroits appropriés.

6. Dispositif selon la revendication 5, caractérisé par le fait que le prolongement (28) comporte, du côté opposé au coulisseau (4), deux évidements (30, 31) propres à coopérer avec une bille (32) poussée élastiquement et arrêtée par le carter suivant la direction des coulisseaux, ces deux évidements (30, 31) étant séparés par une distance égale au déplacement de la pièce intermédiaire (9) entre la position de marche arrière et la position neutre, le susdit prolongement (28) comportant du côté tourné vers les coulisseaux un seul évidement (34) prévu au voisinage de l'extrémité de ce prolongement et propre à coopérer avec des moyens de verrouillage formés notamment par un alignement de pions.

7. Dispositif selon l'une quelconque des revendications précédentes, pour boîte de vitesses à cinq rapports et une marche arrière, caractérisé par le fait que la commande de la marche arrière et du 5ème rapport est assurée à partir du même coulisseau (4).

## Claims

1. A control device for a multiple gear ratio and one reverse gear-box, comprising parallel and spaced shift rods (2, 3, 4), more particularly three such shift rods, each shift rod controlling a yoke (5, 6, 7) associated with at least one ratio, and being mounted slidably in the gear-box housing in response to a selector member (8) more particularly in the form of a finger, the reverse gear and an associated ratio, more particularly the highest ratio, being controlled by a single shift rod (4) to which the yoke (7) controlling the said associated ratio is connected for translatory motion, an intermediate member (9) being mounted for translatory motion on the shift rod (4) of the ratio associated with the reverse gear, said intermediate member (9) being adapted to co-operate with a rocking member (10), locking and ball retention means being provided between the shift rods and the housing, characterised in that the said intermediate member (9) is controlled by the selector member (8) in such a manner that it can move while the all shift rods remain stationary, the said intermediate member (9) through its movement driving the rocking member (10) which controls the reverse gear, and locking and ball retention means (V) are provided between the member (9) and the gear-box housing, more particularly to lock the shift rods and retain the intermediate member when the reverse gear is engaged, each yoke being connected for translatory motion to the shift rod which controls it.

2. A device according to claim 1, wherein the intermediate member (9) has a notch (13) adapted to co-operate with the selector member in the form of a finger (8), while the shift rods are provided with sleeves (14, 15, 16) connected for translatory motion to said shift rods, and possibly coinciding with the sleeve of the yoke borne by the shift rod, each sleeve having a transverse extension (14a, 15a, 16a) formed with a notch (14b, 15b, 16b) to co-operate with the selector finger (8), characterised in that the intermediate member (9) and the extensions (14a, 15a, 16a) of the sleeves are so arranged that the notches (13 ; 14b, 15b, 16b) are superimposed — when the gear-box is in the neutral position — in a direction substantially at right angles to a plane extending through the parallel axes of at least two shift rods, so as to allow the selector finger (8) to pass from one notch to another by a translatory motion in said direction.

3. A device according to claim 2, characterised in that the intermediate member (9) and the extension (16a) of the sleeve borne by the shift rod (4) on which the intermediate member is mounted are so arranged that when the gear-box is in the neutral position the notches (13, 16b) of the intermediate member and the extension of said sleeve are situated at each end of the notch superimposition so that for the gear change control the positions of the control lever corresponding to the reverse gear and to the associated ratio, more particularly the fifth, are the maximum distance apart.

4. A device according to claim 2 or 3, characterised in that the intermediate member (9) is in the form of a closed ring of substantially rectangular contour having two lugs (17, 18) at right angles to the shift rod (4) and formed with apertures (19, 20) through which said shift rod extends, said lugs being connected on one side by a cross-member (21) formed with said notch (13) and on the opposite side by a part (22) formed with an aperture (26) adapted to co-operate with one end (27) of the rocking member (10).

5. A device according to claim 4, characterised in that the locking and ball-retention means (V) between the intermediate member (9) and the gear-box housing comprise a continuation (28) forming a kind of attachment substantially parallel to the shift rod (4), such continuation being connected to one of the lugs (18) of the intermediate member, said continuation being formed with recesses (30, 31, 34) at appropriate points.

6. A device according to claim 5, characterised in that the continuation (28) is formed, on the side remote from the shift rod (4), with two recesses (30, 31) adapted to co-operate with a ball (32) elastically biassed and retained by the housing in the direction of the shift rods, said two recesses (30, 31) being separated by a distance equal to the movement of the intermediate member (9) between the reverse gear position and the neutral position, said continuation (28) having on the side facing the shift rods a single recess (34) provided near the end of said continuation and adapted to co-operate with locking means formed, more particularly, by an alignment of pins.

7. A device according to any one of the preceding claims, for a five gear ratio and one reverse gear-box, characterised in that control of the reverse gear and of the fifth ratio is provided by the same shift rod (4).

**Ansprüche**

1. Schaltvorrichtung für Wechselgetriebe mit mehreren Gängen und einem Rückwärtsgang mit vorzugsweise drei parallelen und im Abstand voneinander angeordneten Schaltstangen (2, 3, 4), die unter der Einwirkung eines vorzugsweise als Finger ausgebildeten Wählorgans (8) verschiebbar in dem Gehäuse des Wechselgetriebes montiert sind und deren jede eine Schaltgabel (5, 6, 7) betätigt, die wenigstens einem Gang zugeordnet ist, wobei die Betätigung des Rückwärtsgangs und eines diesem zugeordneten, insbesondere des größten, Gangs durch ein und dieselbe Schaltstange (4) erfolgen und die Schaltgabel (7) zur Betätigung dieses zugeordneten Gangs mit dieser Schaltstange (4) translationsfest verbunden ist, mit einem Zwischenstück (9), das frei verschiebbar auf der Schaltstange (4) des dem Rückwärtsgang zugeordneten Gangs montiert und für das Zusammenwirken mit einem Kipporgan (10) ausgebildet ist, sowie mit zwischen den Schaltstangen und dem Gehäuse vorgesehenen Verriegelungs- und Verrastungsmitteln, dadurch gekennzeichnet, daß das genannte Zwischenstück (9) durch das Wählorgan (8) in der Weise betätigbar ist, daß es sich verschieben kann, wenn alle Schaltstangen fixiert sind, daß das Zwischenstück (9) bei seiner Verschiebung das Kipporgan (10) zur Betätigung des Rückwärtsgangs mitnimmt und daß die Verriegelungs- und Verrastungsmittel (V) zwischen dem Zwischenstück (9) und dem Gehäuse des Getriebekastens angeordnet sind, um bei eingelegtem Rückwärtsgang namentlich die Schaltstangen zu blockieren und das Zwischenstück zu halten, wobei jede Schaltgabel mit der zu ihrer Betätigung dienenden Schaltstange translationsfest verbunden ist.

2. Vorrichtung nach Anspruch 1, bei der das Zwischenstück (9) eine Aussparung (13) für das Zusammenwirken mit dem als Finger (8) ausgebildeten Wählorgan besitzt und die Schaltstangen mit Muffen (14, 15, 16) versehen sind, die translationsfest mit ihnen verbunden sind und vorzugsweise mit der Muffe der von der betreffenden Schaltstange getragenen Schaltgabel zusammenfallen, wobei jede Muffe eine tranversale Erweiterung (14a, 15a, 16a) besitzt, in der eine Aussparung (14b, 15b, 16b) für das Zusammenwirken mit dem Wählfinger (8) vorgesehen ist, dadurch gekennzeichnet, daß das Zwischenstück (9) und die Erweiterungen (14a, 15a, 16a) der Muffen derart angeordnet sind, daß die Aussparungen (13, 14b, 15b, 16b) bei in Leerlaufstellung befindlichem Wechselgetriebe in einer Richtung einander überlagert sind, die annähernd senkrecht zu einer durch die parallelen Achsen wenigstens zweier Schaltstangen gehenden Ebene verläuft, so daß der Wählfinger (8) durch eine Translationsbewegung in dieser Richtung von einer Aussparung zur anderen überführbar ist.

3. Vorrichtung nach Anspruch 2, dadurch gekennzeichnet, daß das Zwischenstück (9) und die Erweiterung (16a) der Muffe, die von derjenigen Schaltstange (4) getragen ist, auf der das Zwischenstück montiert ist, derart angeordnet sind, daß in der Leerlaufstellung des Wechselgetriebes die Aussparungen (13, 16b) des Zwischenstücks einerseits und der Erweiterung der genannten Muffe andererseits sich in den beiden entgegengesetzten Endbereichen der Überlagerung der Aussparungen befinden, so daß die dem Rückwärtsgang und dem ihm zugeordneten, insbesondere dem fünften Gang entsprechenden Positionen des Schalthebels für die Betätigung des Gangwechsels maximale Entfernung voneinander aufweisen.

4. Vorrichtung nach Anspruch 2 oder 3, dadurch gekennzeichnet, daß das Zwischenstück (9) die Form eines geschlossenen Rings mit annähernd rechteckiger Kontur besitzt und zwei zur Schaltstange (4) senkrechte Klauen (17, 18) aufweist, die mit von dieser Schaltstange durchdrungenen Öffnungen (19, 20) versehen und auf einer Seite durch ein die genannte Aussparung (13) tragendes Riegelteil (21) und auf der anderen Seite durch ein Teil (22) miteinander verbunden sind, in welchem ein Loch (26) für das Zusammenwirken mit einem Ende (27) des Kipporgans (10) vorgesehen ist.

5. Vorrichtung nach Anspruch 4, dadurch gekennzeichnet, daß die zwischen dem Zwischenstück (9) und dem Gehäuse des Wechselgetriebes vorgesehenen Verriegelungs- und Verrastungsmittel eine eine Art von Ansatz bildende Verlängerung (28) umfassen, die annähernd parallel zur Schaltstange (4) verläuft und mit einer der Klauen (18) des Zwischenstücks fest verbunden ist und die an geeigneten Stellen Ausnehmungen (30, 31, 34) besitzt.

6. Vorrichtung nach Anspruch 5, dadurch gekennzeichnet, daß die Verlängerung (28) an der der Schaltstange (4) abgewandten Seite zwei Ausnehmungen (30, 31) besitzt, die mit einer elastisch vorgespannten und in dem Gehäuse in Richtung der Schaltstangen arretierten Kugel (32) zusammenwirken und die (30, 31) durch einen Abstand voneinander getrennt sind, der der Verschiebung des Zwischenstücks (9) zwischen der Position des Rückwärtsgangs und der neutralen Position entspricht, und daß die genannte Verlängerung (28) auf der den Schaltstangen zugewandten Seite eine einzige in der Nähe ihres Endes angeordnete Ausnehmung (34) besitzt, die mit vorzugsweise aus einer Anordnung miteinander fluchtender Stifte bestehenden Verriegelungsmitteln zusammenwirkt.

7. Vorrichtung nach einem der vorhergehenden Ansprüche für Wechselgetriebe mit fünf Gängen, dadurch gekennzeichnet, daß die Betätigung des Rückwärtsgangs und des fünften Gangs durch dieselbe Schaltstange erfolgen.

8

Fig.1.

Fig.2.

Fig.6.

Fig.3.

Fig.4.

Fig.5.